# EUROPEAN PATENT SPECIFICATION

(11) **EP 0 710 381 B1**
(45) Date of publication and mention of the grant of the patent: **09.07.1997**
(21) Application number: 94914762.3
(22) Date of filing: 11.04.1994
(51) Int. Cl.: G06F 17/50

(54) **OBJECT-ORIENTED GRAPHIC SWEEP METHOD AND SYSTEM**
OBJEKTORIENTIERTES GRAPHISCHES ABTASTVERFAHREN UND -SYSTEM
METHODE ET SYSTEME DE BALAYAGE GRAPHIQUE ORIENTE OBJET

(30) Priority: 22.10.1993 US 141303
(43) Date of publication of application: 08.05.1996
(73) Proprietor: TALIGENT, INC., Cupertino, CA 95014 (US)
(72) Inventor: SEIDL, Robert, Palo Alto, CA 94303 (US)
(74) Representative: Kindermann, Manfred
(86) International application number: US9403983
(87) International publication number: WO9511489

(56) References cited:
- COMPUTERS & GRAPHICS, vol.23, no.3-4, 1988, UK pages 381 - 389 SISKA ET AL. '3d solid modeling software development for industrial and academic purposes'
- PROCEEDING OF THE SPIE, vol.1610, November 1991, USA pages 132 - 144 BLOOMENTHAL ET AL. 'approximation of sweep surfaces by tensor product NURBS'
- FOLEY ET AL. 'Computer graphics. Principles and practice' 1990 , ADDISON-WESLEY PUBLISHING COMPANY , USA see page 540 - page 541
- COMPUTERS IN MECHANICAL ENGINEERING, vol.6, no.2, September 1987, USA pages 60 - 71 TAN ET AL. 'modeling solids with sweep primitives'
- COMPUTERS & GRAPHICS, vol.23, no.3-4, 1988, UK, pp. 381-389; SISKA ET AL.: '3d solid modeling software development for industrial and academic purposes'
- PROCEEDING OF THE SPIE, vol.1610, November 1991, USA, pp. 132-144;BLOOMENTHAL ET AL.: 'Approximation of sweep surfaces by tensor product NURBS'
- COMPUTERS IN MECHANICAL ENGINEERING, vol.6, no.2, September 1987, USA, pp. 60-71; TAN ET AL.: 'Modeling solids with sweep primitives'

## Description

### Field of The Invention

The present invention generally relates to the field of creating 3D objects on computer displays, and more particularly to creating sweep surfaces in an object-oriented operating system.

### Background Of The Invention

Many prior art computer systems include computer controlled display systems which utilize bit-mapped displays which typically present a graphic image to the user of the computer system. In these computer controlled display systems, a bit-mapped image appears on a display means, such as a Cathode Ray Tube (CRT) or Liquid Crystal Display (LCD); the bit-mapped image is typically generated and stored in a frame buffer which acts as a memory for the display system. In these display systems, the user typically interacts with the computer system by manipulating a cursor control means, such as a mouse. The user uses the mouse to position a cursor on the bit-mapped image to select options which are displayed under the control of the computer system on the display means.

Advances in computer graphics have extended the range of capabilities for the user. Objects can now be displayed in three-dimensional (3D) representation, for example in wireframe, solid and/or shaded forms. While a 3D trackball input controller device has been utilized for manipulating objects displayed in 3D representation, it is complex and expensive. Various techniques utilizing two-dimensional (2D) input controllers such as a mouse have been developed for transforming 2D representations of objects into a 3D representation. Some of the earliest work was done at CADAM for Lockheed on an IBM mainframe system. These early systems typically used a set of points on a display and transformed the points into a solid representation approximating the 3D representation on a 2D display.

Another technique that can be used to create and display 3D images is to take a 2D surface and move it through a 3D space. The volume swept by the path of the 2D surface creates a 3D surface. This process is described in *3D Solid Modeling Software Development for Industrial and Academic Purposes,* by J. Carlos Siska. This document discloses the general concept of sweeping and outlines, conceptually, various types of modelers for performing sweeping operations.

A formal mathematical approach to approximating sweep surfaces is described in *Approximation of Sweep Surfaces by Tensor Product NURBS,* by Bloomcnthal et. al. This document includes a relatively sophisticated mathematical analysis of tensor product non-uniform rational B-splines (NURBS) for approximating sweep surfaces. Although this document fills out the general concept of sweeping, by teaching the formal mathematics of the technique, it does not teach a computer implementation of a sweeping system or object-oriented framework, it does however disclose the basis for parts a) to d) of the method and system as set out in claims 1 and 8, respectively.

### Summary Of The Invention

An objective of the present invention is to provide an improved technique for transforming a two-dimensional graphic contour with an associated trajectory into a three-dimensional graphic contour.

A preferred embodiment enables the creation of a three-dimensional sweep of a two-dimensional contour by specifying an initial point for the three-dimensional representation, specifying at least one two-dimensional contour, specifying a trajectory vector and generating a three-dimensional sweep conforming to the two-dimensional contour along the path of the trajectory vector. The sweep is a three-dimensional representation of the contour along the path of the trajectory. Support is also provided for scaling, twisting and other modifications of the sweep.

### Brief Description Of The Drawings

The present invention is illustrated by way of example and not limitation in the figures of the accompanying drawings, in which like references indicate similar elements, and in which:
Figure 1 depicts a generalized block diagram of a computer in accordance with a preferred embodiment;
Figure 2 illustrates the basics of sweeping in accordance with a preferred embodiment;
Figure 3 illustrates a simple variation of the contour and its effect on sweep processing in accordance with a preferred embodiment;
Figure 4 illustrates an open contour in accordance with a preferred embodiment;
Figure 5 shows some examples of a trajectory curve's influence on the shape of the sweep in accordance with a preferred embodiment;
Figure 6 illustrates a contour defined by a 2D coordinate system and the sweep resulting from pulling the contour towards the positive z axis in accordance with a preferred embodiment;
Figure 7 illustrates how a contour defines the sweep surface's parametric u-direction and the trajectory defines the parametric V value in accordance with a preferred embodiment;
Figure 8 shows how the parametric ranges of the input curves are preserved in the output surface in accordance with a preferred embodiment;
Figure 9 and Figure 10 illustrate an application of the "ant" rule in accordance with a preferred embodiment;
Figure 11 illustrates a discontinuous contour with a resulting sweep in accordance with a preferred embodiment;
Figure 12 illustrates the current contour blending done with a linear blending function in accordance with a preferred embodiment;
Figure 13 illustrates a contour swept along a trajectory in accordance with a preferred embodiment;
Figure 14 illustrates an example of a contour, linear trajectory and resultant sweep object produced using linear trajectories in accordance with a preferred embodiment;
Figure 15 illustrates an example of this placing operation in accordance with a preferred embodiment;
Figure 16 illustrates an intuitive mapping of a trajectory in accordance with a preferred embodiment;
Figures 17 and 18 illustrate examples of an Initial Contour X Direction vector in accordance with a preferred embodiment;
Figures 19 and 20 illustrate sweep surfaces that have been scaled in accordance with a preferred embodiment;
Figures 21 and 22 illustrate examples of twisting in accordance with a preferred embodiment;
Figure 23 illustrates some of the primitives provided in accordance with a preferred embodiment;
Figure 24 illustrates a rotation sweep in accordance with a preferred embodiment;
Figure 25 illustrates hollow objects modeled using contours that are symmetrical in accordance with a preferred embodiment;
Figure 26 illustrates a translation sweep in accordance with a preferred embodiment;
Figure 27 is a flowchart setting forth the detailed processing of a preferred embodiment;
Figure 28 is a second flowchart which shows at what point during the sweep pipeline certain methods are called in accordance with a preferred embodiment;
Figure 29 illustrates the three unit vectors and a contour plane orientation and coordinate system in accordance with a preferred embodiment;
Figure 30 illustrates graphically the computation of the computed tangent in accordance with a preferred embodiment; and
Figure 31 illustrates contours in a contour list in accordance with a preferred embodiment.

### Detailed Description In Accordance With A Preferred Embodiment

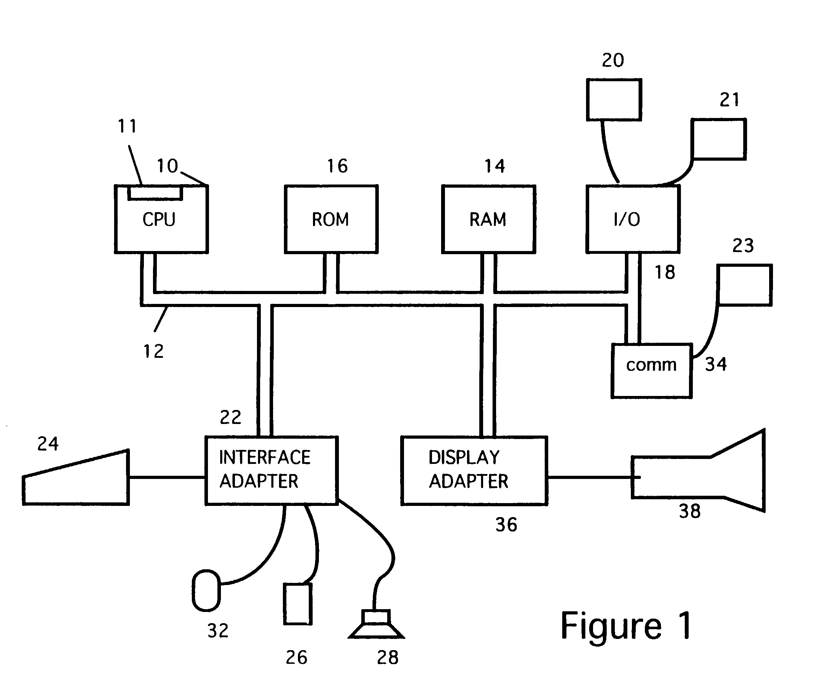

A preferred embodiment generally involves the manipulation of a computer displayed object represented in three-dimensional form, and it would be helpful to provide a brief discussion of the pertinent computer environment. Referring now to the drawings, and more particularly to Figure 1, the invention is preferably for use in the context of an operating system resident on a general purpose computer. The computer has a CPU 10 a high resolution display device 38, such as a cathode ray tube (CRT) or, alternatively, a liquid crystal display (LCD). The type of display is not important except that it should be a display capable of the high resolutions required for windowing systems typical of graphic user interfaces (GUIs). User input to the computer is by means of a keyboard 24 and a cursor pointing device, such as the mouse 32. The mouse 32 is connected to the interface adapter 22 which, in turn, is connected to the system bus 12. Alternatively, the mouse 32 may be connected to a dedicated or serial port connected to the system bus 12. Examples of general purpose computers of the type shown in Figure 1 are the Apple Macintosh® (registered trademark of Apple Computer) and the IBM PS/2. Other examples include various workstations such as the IBM RISC System/6000 and the Sun Microsystems computers.

### Introduction

A preferred embodiment utilizes a 3D Sweep object to create surface geometry from simple curve input. The object provides an easy way to create 3D shapes. It is also very versatile and extensible.

### Features of A Preferred Embodiment

Manufactured product shapes can be represented using sweeping techniques. Many three dimensional object can be modeled using sweeps. Sweeps are easy to use because no mathematical or NURBS (Non-Uniform Rational B-Spline) curve knowledge is required. Sweeping along are segment and circles, straight line segments and combinations thereof are represented precisely. There are no restrictions on input curves. Thus, any order, number of points, or shape is supported. The sweep object supports curvature discontinuities (i.e. kinks, bends, corners). it also supports discontinuous input curves, such as piecewise curves. The resulting surface will inherit these discontinuities and exhibit corners or breaks. In other words, a single sweep can produce several visually disconnected surface pieces. The parameterization of input curves is preserved. Contour curves form the resulting surfaces parametric u-direction and the trajectory curve defines the surfaces parametric v-direction. Sweep primitives retain their input or generative data such as contours and trajectories. For rendering, the sweep object creates a surface geometry.

A subclassing framework is also used to simplify the creation of new shape variations or additional geometry by subclassing one or more bottleneck routines. Each bottleneck routine is called from within the sweep's shape generation routine and passed appropriate data. Subclasses can read or modify any of the data.

A clear definition is provided for determining the outside of the created surface. A flexible subclass definition is important since different shaders may be used for the inside and outside surface of a shape. Sweeps can also be animated by animating their input curves using simple interpolation.

### Sweeping

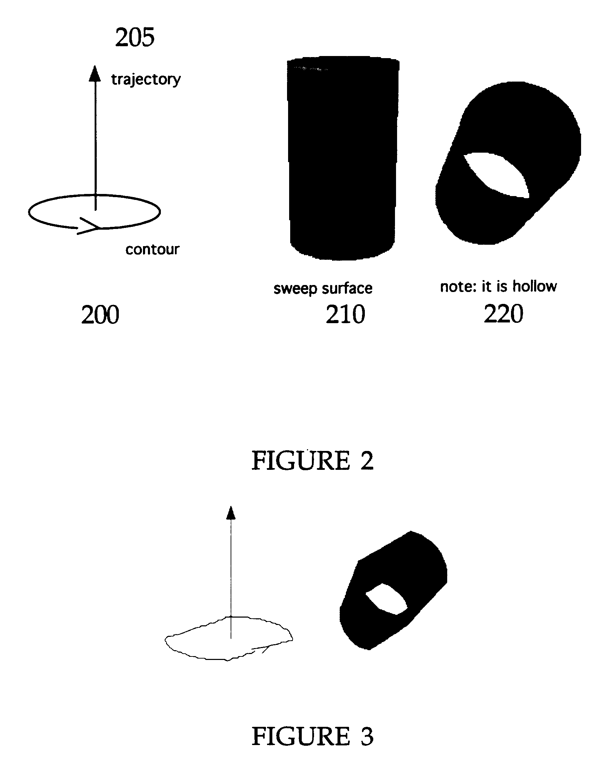

The basics of sweeping are set forth in Figure 2. A contour 200 has an associated trajectory 205 which is used to create a sweep surface 210 which can be hollow as shown at 220. The C++ code for performig this function is set forth below.

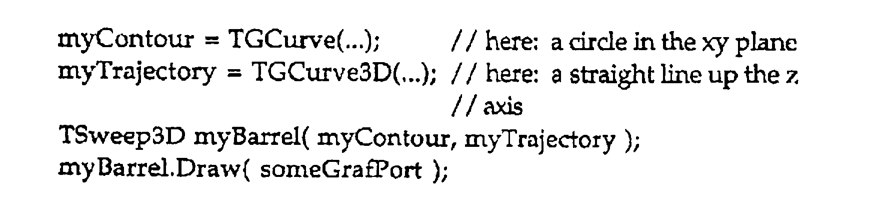

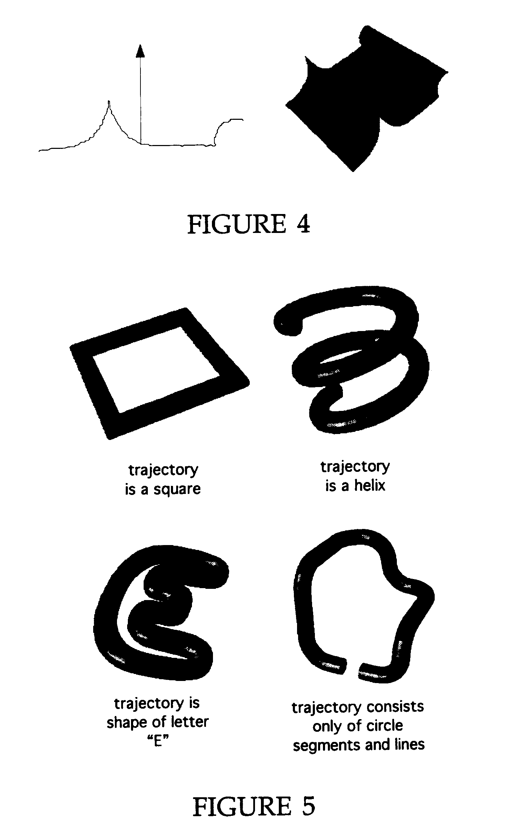

So, the process of sweeping can be thought of as dragging a contour curve along an arbitrary path in space (here the path is a rather simple straight line). A simple variation of the contour produces the sweep surface shown in Figure 3. Contours do not have to be closed. Figure 4 illustrates an open contour, which also has two kinks in it. Figure 5 shows some examples of a trajectory curve's influence on the shape of the sweep. The circular contour from the earlier example is used for all four sweeps.

### Relationship 2D/3D Coordinate systems

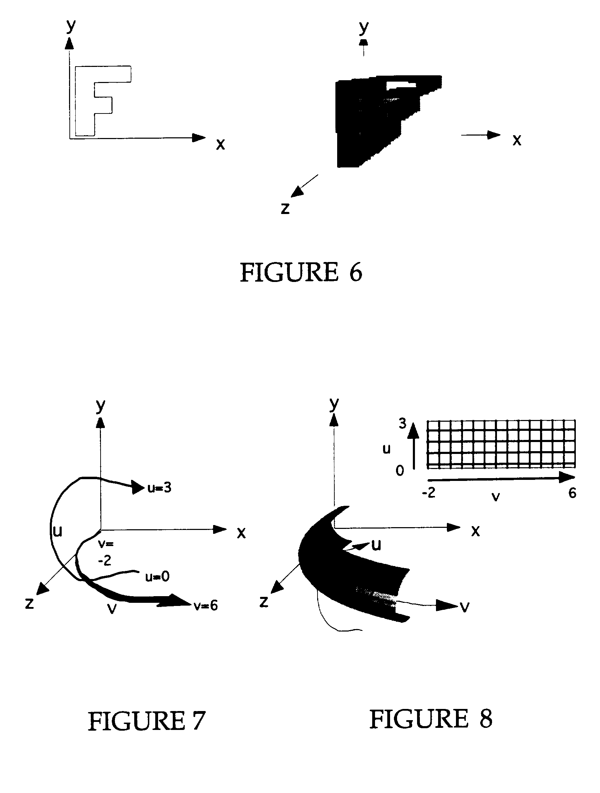

It is important to define how a 2D coordinate system (xy) and a 3D coordinate system (xyz) interact, since the sweep object gets its inputs from both worlds. For the discussion that follows, we use the mathematical convention for drawing 2D coordinate systems, i.e. with the y-axis pointing up. To get the example curves on the screen using a preferred embodiment, apply a transform to flip the y-axis, since the 2D coordinate system's y-axis points down. Figure 6 illustrates a contour defined by a 2D coordinate system and the sweep resulting from pulling the contour towards the positive z axis in accordance with a preferred embodiment.

### Input Curve Parametric Ranges And Surface U,V Coordinates

Figure 7 illustrates how a contour defines the sweep surface's parametric u-direction and the trajectory defines the parametric V value. Figure 8 shows how the parametric ranges of the input curves are preserved in the output surface.

### Surface Orientation: The "Ant" Rule

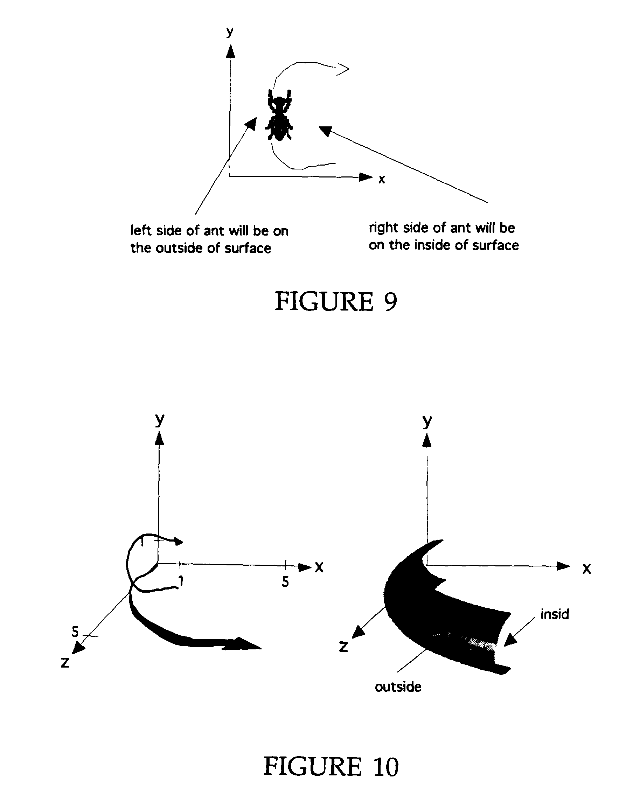

The so-called "ant" rule is used to accurately predict which side of a sweep surface is going to be pointed to the outside and which side of a sweep surface is pointed to the inside of a sweep surface. A preferred embodiment employs different shaders for each side of the surface. The "ant" rule is based on an ant walking along a contour curve from its beginning to its end (a curve has a direction). Figures 9 and 10 illustrate an application of the "ant" rule in accordance with a preferred embodiment. The left side of the ant will form the outside of the surface and the right side will form the inside of the sweep surface. The sample code, in accordance with a preferred embodiment, to produce the sweep shown above, is presented below.

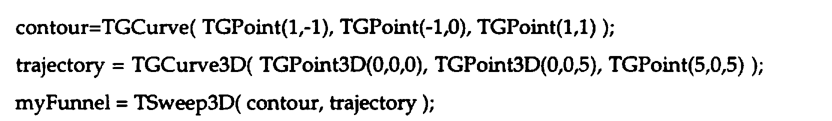

### Sweep Class Description

A sweep object has two constructors: one which takes a single contour curve as input and a second one which takes several contour curves as input, using a TCurveList auxiliary object. The surface will then smoothly blend between the given contours. 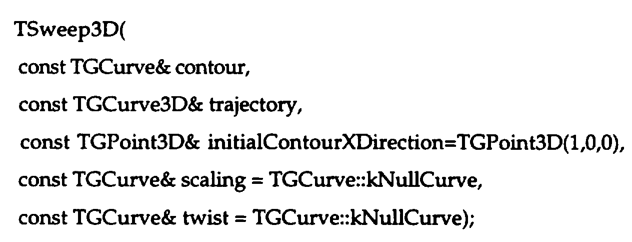 The contour and trajectory parameters have already been discussed. The multiple contour constructor object is presented below. 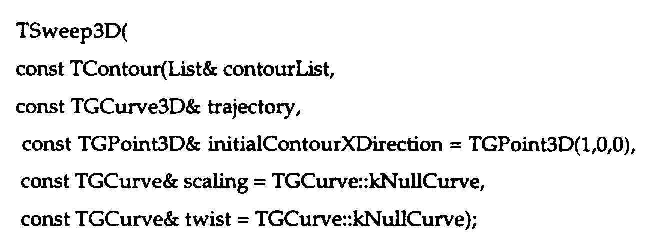 The only other functions worth noting here are the getters and setters, especially CopySurface, which creates a copy of the sweep surface for immediate rendering or subsequent geometric modeling operations.

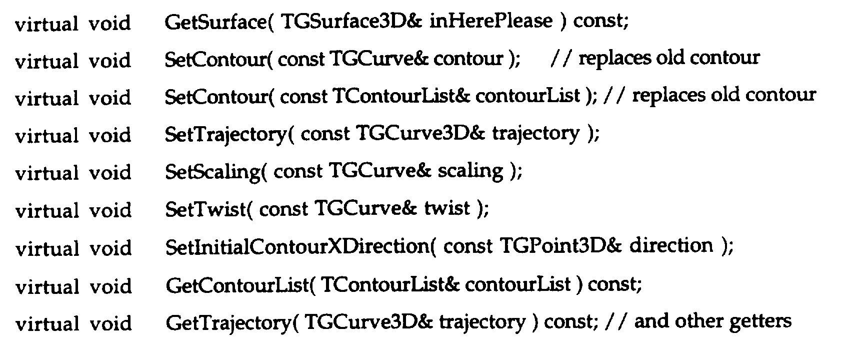

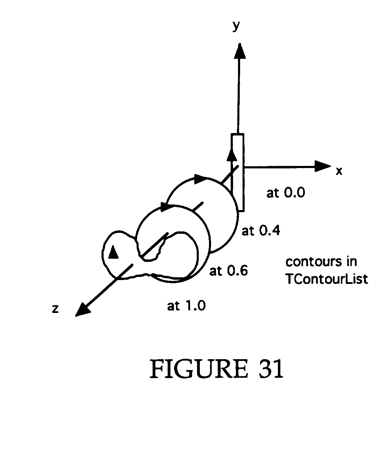

The TContourList object, in addition to holding an array of TGCurves, also records a v-parameter value for each contour curve. TContourList is used to hold a set of contour objects (represented as TGCurves) for input to a Sweep object constructor or the lofting constructor of a TGSurface3D. The object has array-like semantics, i.e. SetNumberContours, GetContour(i) etc. In addition to the contour curves themselves, a parametric value is recorded for each curve. This is used either as a real parametric value or as an arclength along the trajectory curve. There is also a single boolean for the whole contour list that specifies whether the parametric values are to be used as parametric or arclength values. In practical usage, all curves used in a contour list should have the same orientation or else sudden flips will occur in the resulting sweeps/surfaces. The TContourList object specifies where along the sweep trajectory a particular contour should be placed. Values are either parametric values in the same range as the trajectory itself or curve arclength values, to position contour curves along the trajectory as a percentage of their length. Figure 31 illustrates contours in a contour list in accordance with a preferred embodiment.

### Contour Curve Parameter

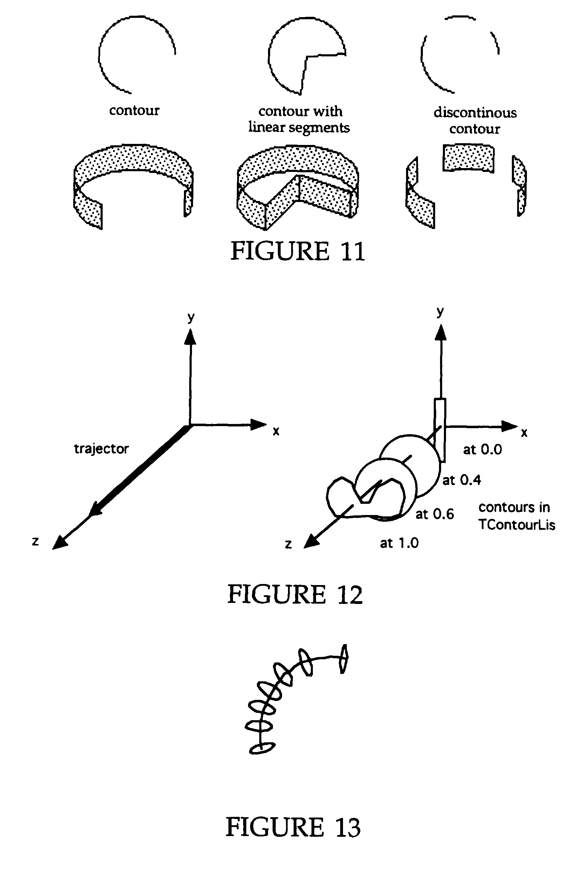

A contour passed to a sweep object constructor is piece wise linear, consists of arbitrary order smooth curves, and can even be discontinuous. If the contour is discontinuous, the resulting sweep produces visually distinct surfaces as illustrated in Figure 11. Multiple contours can be specified in the second form of the constructor. In the next example, four contour curves are positioned along a straight line trajectory pointing up along z. Figure 12 illustrates the current contour blending done with a linear blending function in accordance with a preferred embodiment. A different blending process can be substituted by subclassing the sweep object.

### Trajectory Curve Parameter

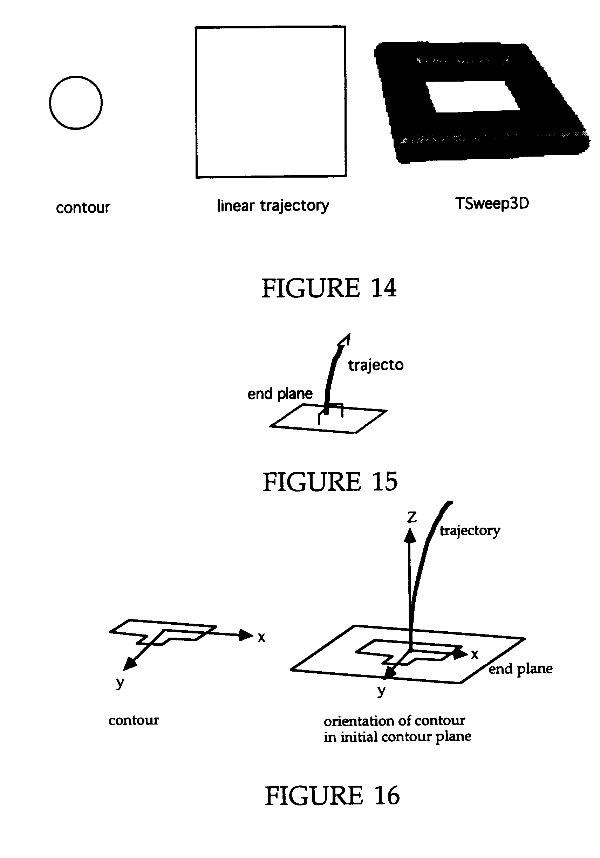

The trajectory is a curve object, which facilitates curves of any order, smooth or kinked or even discontinuous. Also, trajectories can be visually open or closed. When a contour is swept along the trajectory, successive contours are placed in planes that are perpendicular to the trajectory at that point. For piece wise linear or circular arc trajectories, the swept surface is exact, ie. linear constant diameter tubes or constant curvature and constant diameter tubes respectively. Figure 13 illustrates a contour swept along a trajectory in accordance with a preferred embodiment. For arbitrary trajectories, the swept surface is an approximation and therefore the cross-sections may not correspond exactly to the specified contour. However, unless extreme trajectory curvatures are used, the approximation is not noticeable. Figure 14 illustrates an example of a contour, linear trajectory and resultant sweep object produced using linear trajectories. The contour plane in a sweep is usually perpendicular to the trajectory at all points along the sweep. The problem with linear sweeps is that at the corners the trajectory tangent is undefined. It is thus necessary to average the incoming and the outgoing tangent at the corners. The resulting contour plane bisects the two adjoining contour segments.

### InitialContourXDirection Parameter

To commence a sweep operation in accordance with a preferred embodiment, the contour has to be placed in an initial contour plane, perpendicular to the start of the trajectory. Figure 15 illustrates an example of this placing operation in accordance with a preferred embodiment. Without further information, the contour orientation within that plane, i.e. its rotation around the point where the trajectory hits the plane, is undefined. There is an intuitive mapping, which we have exploited in the Figures presented up to now in the application. All trajectories started from the xy plane, pointing straight up the z-axis. In this case, the end plane and the xy-plane coincide. Figure 16 illustrates an intuitive mapping of a trajectory in accordance with a preferred embodiment.

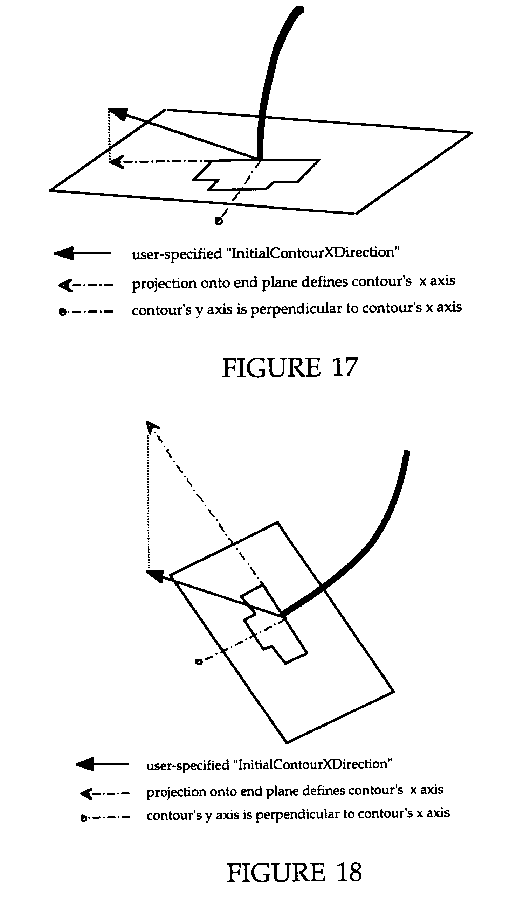

When a trajectory is rotated, the resultant trajectory does not always point up. Thus, a more general mechanism for setting the initial contour orientation is required. In the sweep constructors, this capability is enabled via the "InitialContourXDirection" vector. This vector is going to be projected into the initial trajectory plane and its orientation, and the projected vector will be the contour's x-coordinate. The y-coordinate is perpendicular to the vector. Thus, an x-axis direction can always be found within the trajectory's end plane, unless the trajectory starts off straight into the x-axis, or in general, the end plane normal and the initialContourXDirection vector are collinear. Figures 17 and 18 illustrate examples of an Initial Contour X Direction vector in accordance with a preferred embodiment. The default InitialContourXDirection is TGPoint3D( 1., 0., 0. ). Therefore the contour orientation usually coincides with the contours 2D coordinate system, which is the intuitive behavior as discussed above.

### Scaling curve parameter

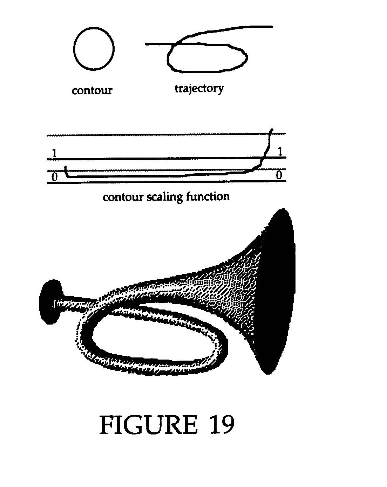

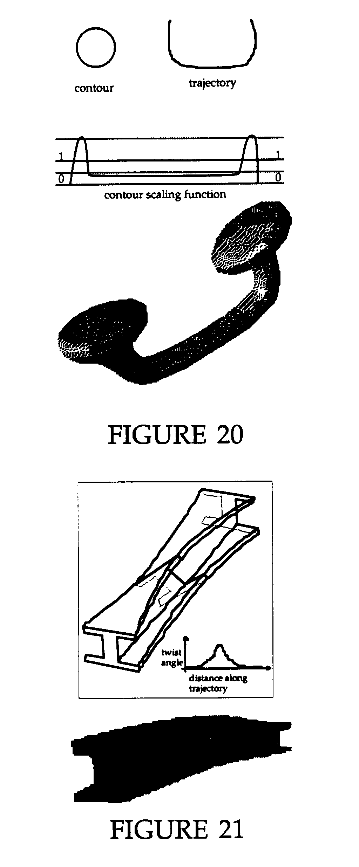

A contour can be scaled along the trajectory. The scaling function is defined by a curve object called the "scaling curve". If no scaling curve is specified, the contour is not scaled. The constructor for a sweep object provides for uniform contour scaling along the contour's x- and y-directions. If non-uniform scaling is required, subclass the sweep object and modify the contour curve. The y-coordinates of the scaling curve should be 0.0 or positive. Negative values will be mirrored to positive values internally. Figures 19 and 20 illustrate sweep surfaces that have been scaled in accordance with a preferred embodiment.

There is an important detail to keep in mind when using scaling curves: since they are used as functions, they should have a unique y-value for every x-value. The x-axis of a scaling curve corresponds to distance along the trajectory. Since this distance is known to the sweep, the scaling curves x-coordinate range can be arbitrarily selected. It will be normalized when the sweep is performed. By default, distance along the trajectory means trajectory arc-length, in other words, visual distance. This is an intuitive way of positioning scaling "bumps" in the curve. If you want the bump to appear between one third and two thirds of the trajectory, simply make a bump in the scaling curve between one-third and two-third as a percentage along trajectory of the length of the scaling curve.

The other possible distance measure is parametric distance along the trajectory, which is for more advanced users. If the trajectory curve has a certain bend, kink or discontinuity at a known parameter value u, it may be useful to have the scaling curve vary the normal values very close to that value u. This is referred to as the SetArclengthMapped( FALSE) method of the sweep object, which specifies you want to use scaling as function of parametric distance along the trajectory.

### Twist Curve Parameter

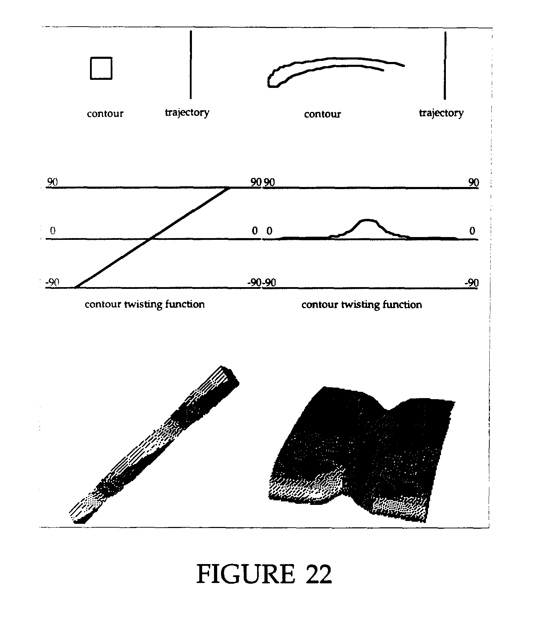

While sweeping the contour along the trajectory, the contour may optionally be rotated or "twisted" in its contour plane. For example, in a plane perpendicular to the trajectory. Just like the scaling curve specifying a unique, continuous scaling function, the twisting curve provides twist angle information. The angle is specified in degrees, so y-coordinate values of the twisting function should be between -180.0 and 180.0 for a complete turn (or more if you want to twist more than a complete turn). Just like for the contour scaling curve, the twist curve is actually used as a function, and so should have a unique y-value for each x-value. Figures 21 and 22 illustrate examples of twisting in accordance with a preferred embodiment.

### Easy-To-Use Subclasses: "Named Constructors"

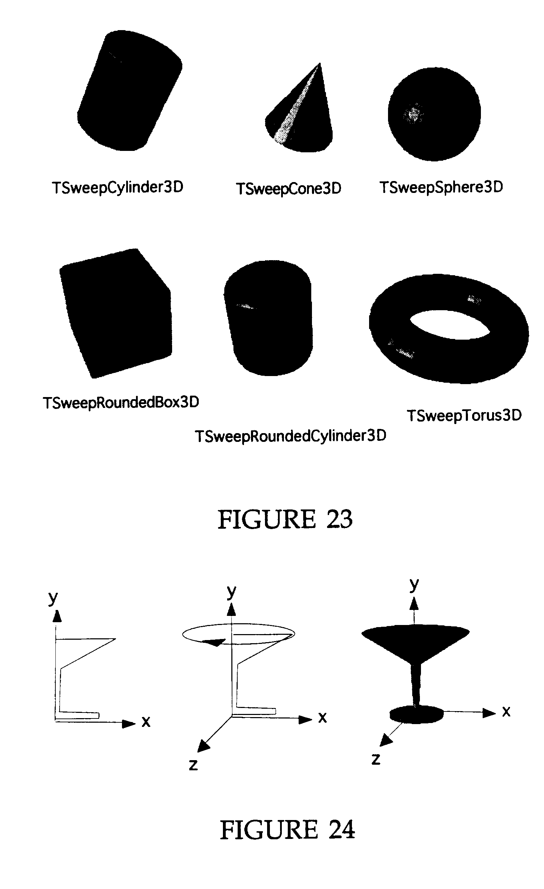

A sweep object in accordance with a preferred embodiment has several methods for setting up commonly occurring modeling operations. These methods have equivalent subclasses. The subclasses define a constructor and provide an explicit naming scheme for various constructors. Figure 23 illustrates some of the primitives provided in accordance with a preferred embodiment. For example, there would be a sphere subclass of the sweep class. It would have parameters for center and radius values. Other subclasses provide diameters, heights, rounding radii etc. as input. The primitives are implemented using a single surface object. To close objects, such as a cylinder or rounded box, the surface will degenerate to a point at the top and bottom. For parametrization dependent shaders (such as texture mapping shaders) this degeneracy may not be desirable. In that case, the sweep object can be subclassed to produce extra cap surfaces which are flat, parametrized and connected to the sweep surface without gaps.

### Surfaces Of Revolution Or Rotation Sweeps

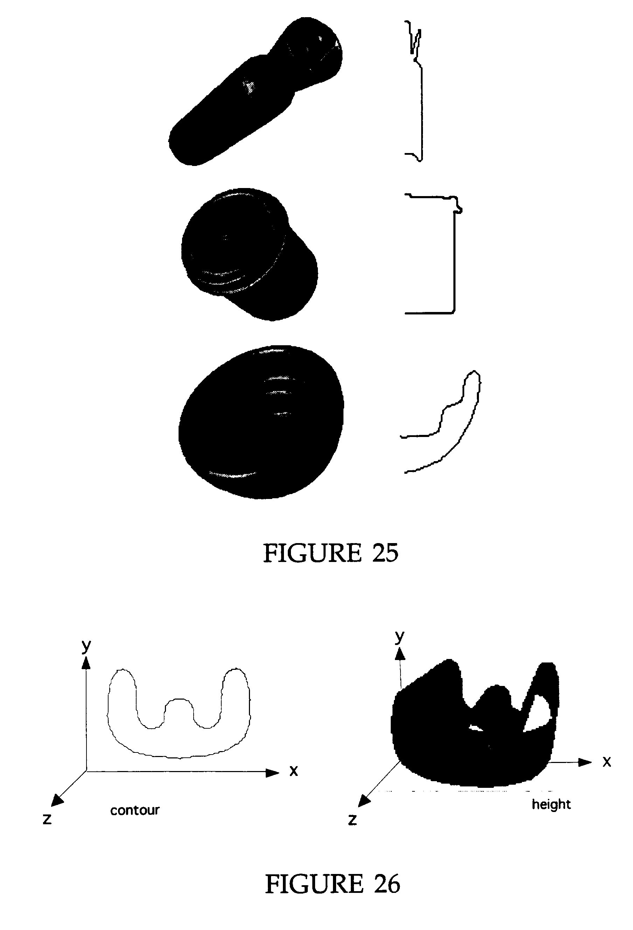

Shapes that are symmetric around a single axis are common. A contour is provided which describes the profile curve or half-section of the shape. Figure 24 illustrates a rotation sweep in accordance with a preferred embodiment. The revolve object constructor then creates a circular trajectory of the appropriate radius and sweeps the contour. Note that the direction of the contour and trajectory curves ensure correct inside/outside orientation of the resulting surface. Figure 25 illustrates hollow objects modeled using contours that are symmetrical in accordance with a preferred embodiment.

### Translation Sweeps Or Extrusions

This is essentially a normal sweep where the trajectory is always a straight line. Since this is a very common operation, a simple subclass is provided that takes only a contour and a height as input. The contour will initially be placed in the xy plane and swept up to the height specified. Figure 26 illustrates a translation sweep in accordance with a preferred embodiment. A preferred embodiment supports extrusion along an arbitrary line in 3D space.

### Sweep Object Subclassing Framework

The sweep is a very generic primitive with lots of parameters designed to provide the maximum shape vocabulary for the minimum amount of parameters. The sweep object has also been architected for extension into user defined areas. Defaults are provided at several points during the sweeping process which are user overridable. Subclassing can be used to support the following functions. Scaling or twist functions emanating directly from a database or mathematical function. Varying contour shaping based on an external function. Orienting contour planes based on user-defined plane orientations ("sweeping frame"). Starting or end capping surfaces of a sweep. These may be flat, or beveled.

### FLOWCHART DISCUSSION

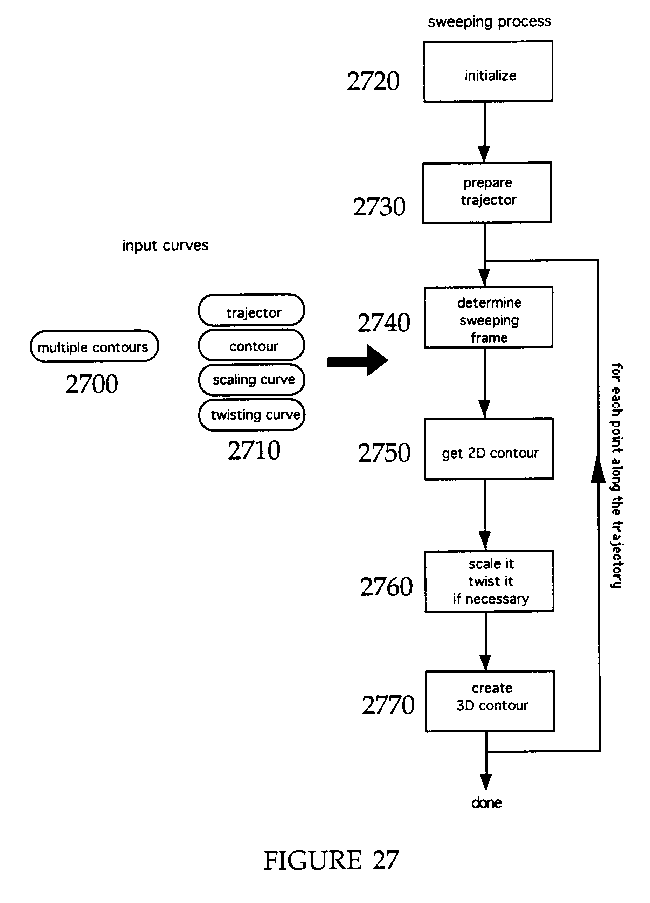

Figure 27 is a flowchart setting forth the detailed processing of a preferred embodiment. The main loop executes once for each control point of the trajectory. Processing commences at 2700 where a parameter in the sweep object indicates whether multiple contours are to be processed. Then, at 2710, additional parameters specifying trajectory, contour, scaling curve and twisting curve are either defaulted or set according to user preferences. The sweeping process commences at function block 2720 where initialization occurs. Then, in function block 2730, the trajectory is prepared based on input information at 2710. A processing loop is then commenced at 2740 to determine the sweeping frame, at 2750 the two-dimensional contour is obtained, it is scaled, twisted or rotated at function block 2760 and finally a resultant 3D contour is created at function block 2770. Then, for each point along the trajectory, this processing is repeated.

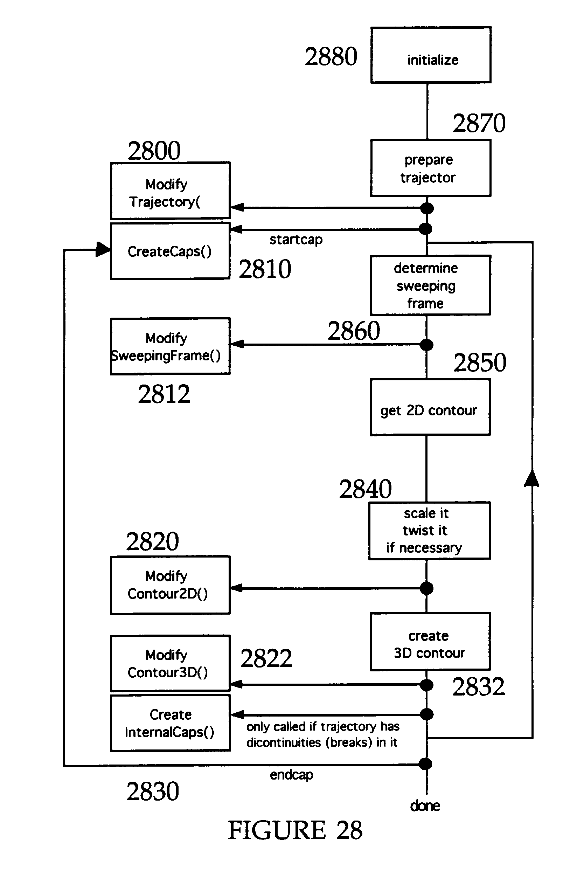

Figure 28 is a second flowchart which shows at what point during the sweep pipeline certain methods are called in accordance with a preferred embodiment. These methods can be overridden, but defaults are provided as discussed above. All methods get necessary and useful data passed in which is already initialized to the value that the standard sweep operation has set them to. These values can be modified with the constraints described below. Standard sweep object trajectory preparation may refine the trajectory curve and raise its order as shown in function block 2800, so that the resulting surface can exhibit the same order of effect present in scaling or twisting curves. For example, if the trajectory curve was originally linear (order 2), and the scaling curve was cubic (order 4), then the trajectory is raised to order 4 as well, so that smooth variations in the scaling curve will shows up as smooth variations in the swept surface. A linear trajectory could not display a round "bump".

Trajectory preparation also inserts extra knots into the trajectory where the scaling or twisting curves have kinks (C1 discontinuities, <order-1>-fold knots) or breaks (C0 discontinuities, <order>-fold knots). This is done so that a kink in a scaling curve actually shows up as a ridge in the swept surface. Essentially, this refinement controls the sampling of data along the trajectory.

Finally, if multiple contours are used, extra knots are inserted at each contour position and 2 additional knots are inserted between successive contour positions. Again, this controls the sampling rate, assuring that we get a sample near the actual contour position and a couple in between so the interpolation is smoother.

The loop in Figure 28 is a loop over all control points of the trajectory curve. The sweep procedure creates a single row of control points for each trajectory control point. The parameter value u corresponding to each trajectory control point is actually the average of <order-1> successive knot values. This average is called a node value and it is an approximation to the parameter value at which the control point exerts most influence on the trajectory curve. There is precisely one node value for each trajectory control point.

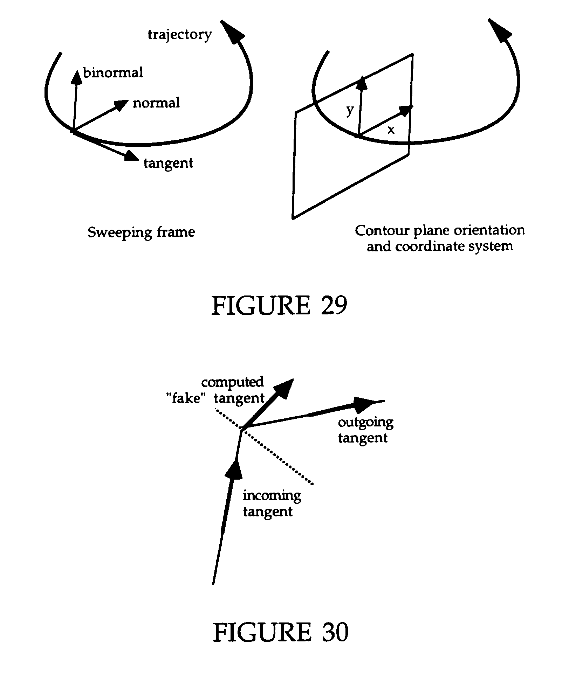

If you want to increase sampling rates along the trajectory, refine the trajectory curve further. You may also increase the order of the trajectory curve. Note that decreasing the number of knots (and thus control points) or the order will generally yield bad results because of aliasing due to undersampling of the trajectory. The sweeping frame is a set of three mutually orthogonal unit vectors that define the contour plane and the orientation of the contour within that plane. Figure 29 illustrates the three unit vectors and a contour plane orientation and coordinate system in accordance with a preferred embodiment.

The three vectors provided are:
(1) the trajectory tangent,
   which serves as the contour plane normal.
(2) the trajectory normal,
   which serves as a contour coordinate system x-direction vector; and
(3) the trajectory binormal,
   which serves as a contour coordinate system y-direction vector.

The parameter value u which is the value when sweep processing is invoked is the node value of the i-th trajectory control point. For linear trajectories, some special case code is executed since neither tangents nor curvatures are defined at node values (=the corners between the line segments). The special case code emulates a tangent by averaging the incoming and outgoing tangents, producing the bisecting plane normal. Figure 30 illustrates graphically the computation of the computed tangent in accordance with a preferred embodiment.

While the invention has been described in terms of a preferred embodiment, those skilled in the art will recognize that the invention can be practiced with modification.

## Claims

1. A computer-implemented method using an object-oriented approach, and responsive to a user request, for creating a three-dimensional sweep (210) of a two-dimensional contour (200) along a three-dimensional trajectory (205) having a plurality of predetermined control points (Fig. 27) thereon in accordance with predetermined rotation, twisting and scaling information, the method operating in a computer system (Fig. 1) with a storage (14) and comprising the steps of:
(a) constructing in the storage a three-dimensional curve object having a plurality of parameters defining a 3D curve in three-dimensional space;
(b) initializing the parameters of the three-dimensional curve object so that the 3D curve defined thereby represents the three-dimensional trajectory;
(c) constructing in the storage a two-dimensional curve object having a plurality of parameters defining a 2D curve in two-dimensional space;
(d) initializing the parameters of the two-dimensional curve object so that the 2D curve represents the two-dimensional contour;
(e) constructing in the storage a three-dimensional sweep object having a first member function (2750, 2860) for orienting the 2D curve in the two-dimensional curve object in accordance with a sweeping frame at one of the plurality of control points, a second member function (2760, 2840) for modifying the 2D curve in the two-dimensional curve object in accordance with the rotation, twisting and scaling information and a third member function (2770, 2832) for creating a three-dimensional contour object from the three-dimensional curve object and the oriented and modified two-dimensional curve object; and
(f) executing the first member function, the second member function and the third member function for each of the plurality of control points (Fig. 27) in response to the user request.

2. The method of claim 1 wherein the two-dimensional curve object has an x coordinate parameter and a y coordinate parameter and wherein the rotation, twisting and scaling information includes a two-dimensional scaling curve object representing changes in the x and y coordinate parameters along a scaling trajectory, and wherein step (f) includes the step of:
(f.1) executing the second member function to modify the x and y coordinate parameters using the 3D curve in the three dimensional curve object as the scaling trajectory.

3. The method of claim 1 wherein the 2D curve in the two-dimensional curve object lies within a plane and wherein the rotation, twisting and scaling information includes a two-dimensional twisting curve object representing rotation of the 2D curve within the plane along a twisting trajectory, and wherein step (f) includes the step of:
(f.2) executing the second member function to rotate the 2D curve using the 3D curve in the three dimensional curve object as the twisting trajectory.

4. The method of claim 1 further including the step of
(g) blending adjacent contours of the two-dimensional curve object according to a predetermined linear blending function.

5. The method of claim 1 wherein the two-dimensional curve object has an x coordinate parameter and a y coordinate parameter and wherein the rotation, twisting and scaling information includes an initial x direction for the 2D curve and wherein step (f) includes the step of:
(f.3) executing the first member function to orient the x coordinate parameter of the two-dimensional curve object in accordance with the initial x direction.

6. The method of claim 1 wherein the rotation, twisting and scaling information comprises default rotation, twisting and scaling information and wherein step (f) includes the additional step of:
(f.3) overriding the default rotation, twisting and scaling information with user-provided rotation, twisting and scaling information.

7. The method of claim 1 wherein the trajectory has a tangent at each of the plurality of control points and wherein the third member function of the sweep object creates three-dimensional contour objects using the tangent of thc trajectory and wherein the method further includes the step of:
(h) when the trajectory has a discontinuity at one of the plurality of control points, providing an average tangent value to the third member function, the average tangent value being the average of tangent values at control points located on either side of the one control point.

8. A system based on an object-oriented approach, and responsive to a user request, for creating a three-dimensional sweep (210) of a two-dimensional contour (200) along a three-dimensional trajectory (205) having a plurality of predetermined control points (Fig. 27) thereon in accordance with predetermined rotation, twisting and scaling information, the system operable in a computer system (Fig. 1) with a storage (14) and comprising:
(a) means for constructing in the storage a three-dimensional curve object having a plurality of parameters defining a 3D curve in three-dimensional space ;
(b) means for initializing the parameters of the three-dimensional curve object so that the 3D curve defined thereby represents the three-dimensional trajectory;
(c) means for constructing in the storage a two-dimensional curve object having a plurality of parameters defining a 2D curve in two-dimensional space ;
(d) means for initializing the parameters of the two-dimensional curve object so that the 2D curve represents the two-dimensional contour;
(e) means for constructing in the storage a three-dimensional sweep object having a first member function (2750, 2860) for orienting the 2D curve in the two-dimensional curve object in accordance with a sweeping frame at one of the plurality of control points, a second member function (2760, 2840) for modifying the 2D curve in the two-dimensional curve object in accordance with the rotation, twisting and scaling information and a third member function (2770, 2832) for creating a three-dimensional contour object from the three-dimensional curve object and the oriented and modified two-dimensional curve object; and
(f) means responsive to the user request for executing the first member function, the second member function and the third member function for each of the plurality of control points (Fig. 27).

9. The system of claim 8 wherein the two-dimentional curve object has an x coordinate parameter and a y coordinate parameter and wherein the rotation, twisting and scaling information includes a two-dimensional scaling curve object representing changes in the x and y coordinate parameters along a scaling trajectory, and wherein the executing means includes means for modifying the x and y coordinate parameters using the 3D curve in the three dimensional curve object as the scaling trajectory.

10. The system of claim 8 wherein the 2D curve in the two-dimensional curve object lies within a plane and wherein the rotation, twisting and scaling information includes a two-dimensional twisting curve object representing rotation of the 2D curve within the plane along a twisting trajectory, and wherein the executing means includes means for rotating the 2D curve using the 3D curve in the three dimensional curve object as the twisting trajectory.

11. The system of claim 8 further including means for blending adjacent contours of the two-dimensional curve object according to a predetermined linear blending function.

12. The system of claim 8 wherein the two-dimensional curve object has an x coordinate parameter and a y coordinate parameter and wherein the rotation, twisting and scaling information includes an initial x direction for the 2D curve and wherein the executing means includes means for orienting the x coordinate parameter of the two-dimensional curve object in accordance with the initial x direction,

13. The system of claim 8 wherein the rotation, twisting and scaling information comprises default rotation, twisting and scaling information and wherein the executing means includes means for overriding the default rotation, twisting and scaling information with user-provided rotation, twisting and scaling information.

14. The system of claim 8 wherein the trajectory has a tangent at each of the plurality of control points and wherein the third member function, of the sweep object creates three-dimensional contour objects using the tangent of the trajectory and wherein the system further includes
(g) means responsive to a discontinuity in the trajectory at one of the plurality of control points for providing an average tangent value to the third member function, the average tangent value being the average of tangent values at control points located on either side of the one control point.

## Patentansprüche

1. Ein durch Computer ausführbares Verfahren, das eine objektorientierte Methode verwendet und auf eine Benutzeranforderung zur Wirkung kommt zur dreidimensionalen Abtastung (210) einer zweidimensionalen Kontur (200) entlang einer dreidimensionalen Bahn (205) mit einer Vielzahl von Kontrollpunkten (Fig.27) in Übereinstimmung mit vorbestimmter Rotations-, Drehungs- und Skalierungsinformation, das Verfahren wird in einem Computersystem (Fig. 1) ausgeführt, das mit einem Speicher (14) ausgerüstet ist, und umfaßt die Schritte:
(a) Erzeugen eines dreidimensionalen Kurvenobjekts im Speicher, das eine Vielzahl von Parametern aufweist, die eine 3D Kurve in einem dreidimensionalen Raum definieren;
(b) Initialisieren der Parameter des dreidimensionalen Kurvenobjekts, so daß die 3D Kurve definiert wird zur Darstellung der dreidimensionalen Bahn;
(c) Erzeugen eines zweidimensionalen Kurvenobjekts im Speicher, das eine Vielzahl von Parametern aufweist, die eine 2D Kurve in einem zweidimensionalen Raum definieren;
(d) Initialisieren der Parameter des zweidimensionalen Kurvenobjekts, so daß die 2D Kurve eine zweidimensionale Kontur darstellt;
(e) Erzeugen eines dreidimensionalen Abtastobjekts im Speicher, das eine erste Mitgliedsfunktion (2750, 2860) enthält zur Orientierung der 2D Kurve im zweidimensionalen Kurvenobjekt in Übereinstimmung mit einem Abtastrahmen an einem der Vielzahl von Kontrollpunkten, das eine zweite Mitgliedsfunktion (2760, 2840) enthält zur Änderung der 2D Kurve im zweidimensionalen Kurvenobjekt in Übereinstimmung mit der Rotations-, Drehungs- und Skalierungsinformation und das eine dritte Mitgliedsfunktion (2770, 2832) enthält zum Erzeugen eines dreidimensionalen Konturobjekts aus dem dreidimensionalen Kurvenobjekt und dem orientierten und geänderten zweidimensionalen Kurvenobjekt; und
(f) Ausführen der ersten Mitgliedsfunktion, der zweiten Mitgliedsfunktion und der dritten Mitgliedsfunktion für jeden der Vielzahl von Kontrollpunkten (Fig. 27) als Antwort auf eine Benutzeranforderung.

2. Das Verfahren nach Anspruch 1, worin das zweidimensionale Kurvenobjekt einen x Koordinaten-Parameter und einen y Koordinaten-Parameter aufweist und worin die Rotations-, Drehungs- und Skalierungsinformation ein zweidimensionales Skalierungskurvenobjekt aufweist, das die Änderungen in den x und y Koordinaten-Parametern entlang einer Skalierungsbahn darstellt, und worin der Schritt (f) den Schritt enthält:
(f.1) Ausführen der zweiten Mitgliedsfunktion zum Ändern der x und y Koordinaten-Parameter unter Benutzung der 3D Kurve in dem dreidimensionalen Kurvenobjekt als Skalierungsbahn.

3. Das Verfahren nach Anspruch 1, worin die zweidimensionale Kurve im zweidimensionalen Kurvenobjekt in einer Ebene liegt und worin die Rotations-, Drehungs- und Skalierungsinformation ein zweidimensionales Drehkurvenobjekt enthält, das eine Rotation der 2D Kurve in der Ebene entlang einer Drehungsbahn darstellt, und worin der Schritt (f) den Schritt enthält:
(f.2) Ausführen der zweiten Mitgliedsfunktion zur Rotation der 2D Kurve unter Benutzung der 3D Kurve in dem dreidimensionalen Kurvenobjekt als Drehungsbahn.

4. Das Verfahren nach Anspruch 1, weiter enthaltend den Schritt der
(g) Mischen benachbarter Konturen des zweidimensionalen Kurvenobjekts entsprechend einer vorbestimmten linearen Mischfunktion.

5. Das Verfahren nach Anspruch 1, worin das zweidimensionale Kurvenobjekt einen x Koordinaten-Parameter und einen y Koordinaten-Parameter aufweist und worin die Rotations-, Drehungs- und Skalierungsinformation eine anfängliche x Richtung für die 2D Kurve enthält und worin der Schritt (f) den Schritt enthält:
(f.3) Ausführen der ersten Mitgliedsfunktion zur Orientierung des x Koordinaten-Parameters des zweidimensionalen Kurvenobjekts in Übereinstimmung mit der anfänglichen x Richtung.

6. Das Verfahren nach Anspruch 1, worin die Rotations-, Drehungs- und Skalierungsinformation eine Standardvorgabe für die Rotations-, Drehungs- und Skalierungsinformation enthält und worin der Schritt (f) den zusätzlichen Schritt enthält:
(f.4) Ersetzen der Standardvorgabe für die Rotations-, Drehungs- und Skalierungsinformation durch vom Benutzer gelieferte Rotations-, Drehungs- und Skalierungsinformation.

7. Das Verfahren nach Anspruch 1, worin die Bahn eine Tangente an jedem der Vielzahl von Kontrollpunkten aufweist und worin die dritte Mitgliedsfunktion des Abtastobjekts ein dreidimensionales Konturobjekt erzeugt, das die Bahntangenten benutzt, und worin das Verfahren weiter den Schritt enthält:
(h) wenn die Bahn eine Diskontinuität an einem der Vielzahl von Kontrollpunkten aufweist, Liefern eines Durchschnitts-Tangentenwertes zur dritten Mitgliedsfunktion, wobei der Durchschnitts-Tangentenwert der Durchschnitt der Tangentenwerte an Kontrollpunkten ist, die sich auf beiden Seiten des einen Kontrollpunktes befinden.

8. Ein System, das auf einer objektorientierten Methode beruht und auf eine Benutzeranforderung zur Wirkung kommt zum Erzeugen einer dreidimensionalen Abtastung (210) von einer zweidimensionalen Kontur (200) entlang einer dreidimensionalen Bahn (205) mit einer Vielzahl von Kontrollpunkten (Fig.27) darauf in Übereinstimmung mit vorbestimmter Rotations-, Drehungs- und Skalierungsinformation, das System arbeitet in einem Computersystem (Fig. 1), das mit einem Speicher (14) ausgerüstet ist, und enthält:
(a) Mittel zum Erzeugen eines dreidimensionalen Kurvenobjekts im Speicher, das eine Vielzahl von Parametern aufweist, die eine 3D Kurve in einem dreidimensionalen Raum definieren;
(b) Mittel zum Initialisieren der Parameter des dreidimensionalen Kurvenobjekts, so daß die 3D Kurve definiert wird zur Darstellung der dreidimensionalen Bahn;
(c) Mittel zum Erzeugen eines zweidimensionalen Kurvenobjekts im Speicher, das eine Vielzahl von Parametern aufweist, die eine 2D Kurve in einem zweidimensionalen Raum definieren;
(d) Mittel zum Initialisieren der Parameter des zweidimensionalen Kurvenobjekts, so daß die 2D Kurve eine zweidimensionale Kontur darstellt;
(e) Mittel zum Erzeugen eines dreidimensionalen Abtastobjekts im Speicher, das eine erste Mitgliedsfunktion (2750, 2860) enthält zur Orientierung der 2D Kurve im zweidimensionalen Kurvenobjekt in Übereinstimmung mit einem Abtastrahmen an einem der Vielzahl von Kontrollpunkten, eine zweite Mitgliedsfunktion (2760, 2840) enthält zur Änderung der 2D Kurve im zweidimensionalen Kurvenobjekt in Übereinstimmung mit der Rotations-, Drehungs- und Skalierungsinformation und eine dritte Mitgliedsfunktion (2770, 2832) enthält zum Erzeugen eines dreidimensionalen Konturobjekts aus dem dreidimensionalen Kurvenobjekt und dem orientierten und geänderten zweidimensionalen Kurvenobjekt; und
(f) Mittel zum Ausführen der ersten Mitgliedsfunktion, der zweiten Mitgliedsfunktion und der dritten Mitgliedsfunktion für jeden der Vielzahl von Kontrollpunkten (Fig. 27).

9. Das System nach Anspruch 8, worin das zweidimensionale Kurvenobjekt einen x Koordinaten-Parameter und einen y Koordinaten-Parameter aufweist und worin die Rotations-, Drehungs- und Skalierungsinformation ein zweidimensionales Skalierungskurvenobjekt aufweist, das die Änderungen in den x und y Koordinaten-Parametern entlang einer Skalierungsbahn darstellt, und worin die Ausführungsmittel Mittel enthalten zum Ändern der x und y Koordinaten-Parameter unter Benutzung der 3D Kurve in dem dreidimensionalen Kurvenobjekt als Skalierungsbahn.

10. Das System nach Anspruch 8, worin die zweidimensionale Kurve im zweidimensionalen Kurvenobjekt in einer Ebene liegt und worin die Rotations-, Drehungs- und Skalierungsinformation ein zweidimensionales Drehkurvenobjekt enthält, das eine Rotation der 2D Kurve in der Ebene entlang einer Drehungsbahn darstellt, und worin die Ausführungsmittel Mittel enthalten zur Rotation der 2D Kurve unter Benutzung der 3D Kurve in dem dreidimensionalen Kurvenobjekt als Drehungsbahn.

11. Das System nach Anspruch 8, weiter enthaltend den Schritt Mittel zum Mischen benachbarter Konturen des zweidimensionalen Kurvenobjekts antsprechend einer vorbestimmten linearen Mischfunktion.

12. Das System nach Anspruch 8, worin das zweidimensionale Kurvenobjekt einen x Koordinaten-Parameter und einen y Koordinaten-Parameter aufweist und worin die Rotations-, Drehungs- und Skalierungsinformation eine anfängliche x Richtung für die 2D Kurve enthält und worin die Ausführungsmittel Mittel enthalten zur Orientierung des x Koordinaten-Parameters des zweidimensionalen Kurvenobjekts in Übereinstimmung mit der anfänglichen x Richtung.

13. Das Verfahren nach Anspruch 1, worin die Rotations-, Drehungs- und Skalierungsinformation eine Standardvorgabe für die Rotations-, Drehungs- und Skalierungsinformation enthält und worin die Ausführungsmittel Mittel enthalten zum Ersetzen der Standardvorgabe für die Rotations-, Drehungs- und Skalierungsinformation durch vom Benutzer gelieferte Rotations-, Drehungs- und Skalierungsinformation.

14. Das System nach Anspruch 8, worin die Bahn eine Tangente an jedem der Vielzahl von Kontrollpunkten aufweist und worin die dritte Mitgliedsfunktion des Abtastobjekts ein dreidimensionales Konturobjekt erzeugt, das die Bahntangenten benutzt, und worin das System weiter enthält:
(h) Mittel, die auf eine Diskontinuität in der Bahn an einem der Vielzahl von Kontrollpunkten ansprechen zum Liefern eines Durchschnitts-Tangentenwertes zur dritten Mitgliedsfunktion, wobei der Durchschnitts-Tangentenwert der Durchschnitt der Tangentenwerte an Kontrollpunkten ist, die sich auf beiden Seiten des einen Kontrollpunktes befinden.

## Revendications

1. Méthode implémentée par ordinateur utilisant une approche orientée objet et en réponse à une requête d'utilisateur, pour créer un balayage tridimensionnel (210) d'un contour bidimensionnel (200) le long d'une trajectoire tridimensionnelle (205) ayant une pluralité de points de contrôle prédéterminés (Fig. 27) conformément à des informations de rotation, de torsion et d'échelle prédéterminées, la méthode étant mise en oeuvre dans un système d'ordinateur (Fig. 1) ayant une mémoire (14) et comprenant les étapes de:
a) construire dans la mémoire un objet courbe tridimensionnel ayant une pluralité de paramètres définissant une courbe 3D dans l'espace tridimensionnel,
b) initialiser les paramètres de l'objet courbe tridimensionnel de manière à ce que la courbe 3D définie ainsi représente la trajectoire tridimensionnelle,
c) construire dans la mémoire un objet courbe bidimensionnel ayant une pluralité de paramètres définissant une courbe 2D dans l'espace bidimensionnel,
d) initialiser les paramètres de l'objet courbe bidimensionnel de manière à ce que la courbe 2D définie ainsi représente le contour bidimensionnel,
e) construire dans la mémoire un objet de balayage tridimensionnel ayant une première fonction (2750, 2860) pour orienter la courbe 2D dans l'objet courbe bidimensionnel conformément à une trame de balayage à l'un d'une pluralité de points de contrôle, une deuxième fonction (2760, 2840) pour modifier la courbe 2D dans courbe bidimensionnel conformément aux informations de rotation, torsion et d'échelle et une troisième fonction (2770, 2832) pour créer un objet de contour tridimensionnel à partir de l'objet courbe tridimensionnel et de l'objet courbe tridimensionnel modifié, et
f) exécuter la première fonction, la deuxième fonction et la troisième fonction pour chacun de la pluralité de points de contrôle (Fig. 27) en réponse à la requête d'utilisateur.

2. Méthode selon la revendication 1, dans laquelle l'objet courbe bidimensionnel a un paramètre de coordonnée x et un paramètre de coordonnée y, et dans laquelle les informations de rotation, de torsion et d'échelle comprennent un objet courbe d'échelle bidimensionnel représentant des modifications dans les paramètres de coordonnées x et y le long d'une trajectoire d'échelle, et dans laquelle l'étape f) comprend l'étape de :
f1) exécuter la deuxième fonction pour modifier les paramètres de coordonnées x et y en utilisant la courbe 3D dans l'objet courbe bidimensionnel comme trajectoire d'échelle.

3. Méthode selon la revendication 1, dans laquelle la courbe 2D dans l'objet courbe bidimensionnel s'étend sur un plan et dans laquelle les informations de rotation, de torsion et d'échelle comprennent un objet courbe de torsion bidimensionnel représentant la rotation de la courbe 2D dans le plan le long d'une trajectoire de torsion, et dans laquelle l'étape f) comprend l'étape de :
f2) exécuter la deuxième fonction pour effectuer une rotation de la courbe 2D en utilisant la courbe 3D dans l'objet courbe tridimensionnel comme courbe de torsion.

4. Méthode selon la revendication 1 comprenant en outre l'étape de :
g) combiner les contours adjacents de l'objet courbe bidimensionnel conformément à une fonction de combinaison linéaire prédéterminée.

5. Méthode selon la revendication 1, dans laquelle l'objet courbe bidimensionnel a un paramètre de coordonnée x et un paramètre de coordonnée y, et dans laquelle les informations de rotation, de torsion et d'échelle comprennent une direction x initiale pour la courbe 2D et dans laquelle l'étape f) comprend l'étape de :
f3) exécuter le première fonction pour orienter le paramètre de coordonnée x de l'objet courbe bidimensionnel conformément à la direction x initiale.

6. Méthode selon la revendication 1, dans laquelle les informations de rotation, de torsion et d'échelle sont des informations de rotation, de torsion et d'échelle par défaut et dans laquelle l'étape f) comprend l'étape additionnelle de
f4) remplacer les informations de rotation, de torsion et d'échelle par des informations de rotation, de torsion et d'échelle fournies par l'utilisateur.

7. Méthode selon la revendication 1, dans laquelle la trajectoire a une tangente à chacun de la pluralité des points de contrôle et dans laquelle la troisième fonction de l'objet de balayage crée des objets de contour tridimensionnels en utilisant la tangente de la trajectoire et dans laquelle la méthode comprend en outre l'étape de :
h) lorsque la trajectoire a une discontinuité à l'un de la pluralité des points de contrôle, fournir une valeur de tangente moyenne à la troisième fonction, la valeur de tangente moyenne étant la moyenne des valeurs de tangente aux points de contrôle situés de chaque côté du point de contrôle.

8. Système basé sur une approche orientée objet, et en réponse à une requête d'utilisateur, pour créer un balayage tridimensionnel (210) d'un contour bidimensionnel (200) le long d'une trajectoire tridimensionnelle (205) ayant une pluralité de points de contrôle prédéterminés (Fig. 27) conformément à des informations de rotation, de torsion et d'échelle prédéterminées, le système étant mis en oeuvre dans un système d'ordinateur (Fig. 1) ayant une mémoire (14) et comprenant :
a) des moyens pour construire dans la mémoire un objet courbe tridimensionnel ayant une pluralité de paramètres définissant une courbe 3D dans l'espace tridimensionnel,
b) des moyens pour initialiser les paramètres de l'objet courbe tridimensionnel de manière à ce que la courbe 3D définie ainsi représente la trajectoire tridimensionnelle,
c) des moyens pour construire dans la mémoire un objet courbe bidimensionnel ayant une pluralité de paramètres définissant une courbe 2D dans l'espace bidimensionnel,
d) des moyens pour initialiser les paramètres de l'objet courbe bidimensionnel de manière à ce que la courbe 2D définie ainsi représente le contour bidimensionnel,
e) des moyens pour construire dans la mémoire un objet de balayage tridimensionnel ayant une première fonction (2750, 2860) pour orienter la courbe 2D dans l'objet courbe bidimensionnel conformément à une trame de balayage à l'un d'une pluralité de points de contrôle, une deuxième fonction (2760, 2840) pour modifier la courbe 2D dans l'objet courbe bidimensionnel conformément aux informations de rotation, torsion et d'échelle et une troisième fonction (2770, 2832) pour créer un objet de contour tridimensionnel à partir de l'objet courbe tridimensionnel et de l'objet courbe tridimensionnel orienté et modifié, et
f) des moyens d'exécution pour, en réponse à la requête d'utilisateur, exécuter la première fonction, la deuxième fonction et la troisième fonction pour chacun de la pluralité de points de contrôle (Fig. 27).

9. Système selon la revendication 8, dans lequel l'objet courbe bidimensionnel a un paramètre de coordonnée x et un paramètre de coordonnée y, et dans lequel les informations de rotation, de torsion et d'échelle comprennent un objet courbe d'échelle bidimensionnel représentant des modifications dans les paramètres de coordonnées x et y le long d'une trajectoire d'échelle, et dans lequel les moyens d'exécution comprennent des moyens pour modifier les paramètres de coordonnées x et y en utilisant la courbe 3D dans l'objet courbe bidimensionnel comme trajectoire d'échelle:

10. Système selon la revendication 8, dans lequel la courbe 2D dans l'objet courbe bidimensionnel s'étend sur un plan et dans lequel les informations de rotation, de torsion et d'échelle comprennent un objet courbe de torsion bidimensionnel représentant la rotation de la courbe 2D dans le plan le long d'une trajectoire de torsion, et dans lequel les moyens d'exécution comprennent des moyens pour effectuer une rotation de la courbe 2D en utilisant la courbe 3D dans l'objet courbe tridimensionnel comme courbe de torsion.

11. Système selon la revendication 8 comprenant des moyens pour combiner les contours adjacents de l'objet courbe bidimensionnel conformément à une fonction de combinaison linéaire prédéterminée.

12. Système selon la revendication 8, dans lequel l'objet courbe bidimensionnel a un paramètre de coordonnée x et un paramètre de coordonnée y, et dans lequel les informations de rotation, de torsion et d'échelle comprennent une direction x initiale pour la courbe 2D et dans lequel les moyens d'exécution comprennent des moyens pour orienter le paramètre de coordonnée x de l'objet courbe bidimensionnel conformément à la direction x initiale.

13. Système selon la revendication 8, dans lequel les informations de rotation, de torsion et d'échelle sont des informations de rotation, de torsion et d'échelle par défaut et dans lequel les moyens d'exécution comprennent des moyens pour remplacer les informations de rotation, de torsion et d'échelle par des informations de rotation, de torsion et d'échelle fournies par l'utilisateur.

14. Système selon la revendication 8, dans lequel la trajectoire a une tangente à chacun de la pluralité des points de contrôle et dans lequel la troisième fonction de l'objet de balayage crée des objets de contour tridimensionnels en utilisant la tangente de la trajectoire et dans lequel le système comprend en outre des moyens en réponse à une discontinuité à l'un de la pluralité des points de contrôle pour fournir une valeur de tangente moyenne à la troisième fonction, la valeur de tangente moyenne étant la moyenne des valeurs de tangente aux points de contrôle situés de chaque côté du point de contrôle.
